# EUROPÄISCHE PATENTSCHRIFT

(11) **EP 2 160 527 B1**
(45) Veröffentlichungstag und Bekanntmachung des Hinweises auf die Patenterteilung: **15.10.2014**
(21) Anmeldenummer: 08774374.6
(22) Anmeldetag: 26.06.2008
(51) Int. Cl.: F16H 59/10, F16H 59/04

(54) **VORRICHTUNG ZUM ERFASSEN VON SCHALTSTELLUNGEN**
DEVICE FOR DETECTING SWITCH POSITIONS
DISPOSITIF DE DÉTECTION DE POSITIONS DE COMMUTATION

(30) Priorität: 28.06.2007 DE 102007029997
(43) Veröffentlichungstag der Anmeldung: 10.03.2010
(73) Patentinhaber: Leopold Kostal GmbH & Co. KG, 58513 Lüdenscheid (DE)
(72) Erfinder: BLECKMANN, Michael, 58239 Schwerte-Ergste (DE)
(74) Vertreter: Kerkmann, Detlef
(86) Internationale Anmeldenummer: PCT/EP2008/058199
(87) Internationale Veröffentlichungsnummer: WO 2009/000896

(56) Entgegenhaltungen:
- EP-A- 0 831 253
- DE-A1- 19 938 110
- DE-B3- 10 336 971

## Beschreibung

Die Erfindung betrifft eine Vorrichtung zum Erfassen von Schaltstellungen eines mechanisch betätigbaren Schaltmittels, mit einem an die Bewegung des Schaltmittels gekoppelten, eine Schaltstellung anzeigenden Geberelement und einem zur ortsaufgelösten Erfassung der Stellung des Geberelements mit diesem kooperierenden, diesbezüglich ortsfest angeordneten Signalaufnahmeelement.

Derartige Vorrichtungen zum Erfassen von Schaltstellungen eines mechanisch betätigbaren Schaltmittels werden beispielsweise in Schalteinrichtungen für Kraftfahrzeuge eingesetzt, um den jeweiligen Schaltwunsch des Fahrers bezogen auf eine durch die Schalteinrichtung zu beeinflussende Funktion elektrisch oder elektronisch zu erfassen. So wird etwa bei Kraftfahrzeugen, die mit einem automatisierten Schaltgetriebe ausgerüstet sind, der eigentliche Schaltvorgang elektrohydraulisch oder elektromotorisch vorgenommen, während der jeweilige Schaltwunsch des Fahrers elektrisch oder elektronisch erfasst wird. Der Schalthebel einer solchen Gangwahl-Schalteinrichtung kann dabei multistabil oder auch monostabil ausgeführt sein, dass heißt er besitzt entweder mehrere rastende Schaltpositionen in denen er verbleibt oder, ähnlich einem Joystick, nur eine stabile Ruheposition, in die der Schalthebel aus mehreren instabilen Stellpositionen immer wieder zurückfällt.
Durch die große Anzahl an elektrischen und mechanischen Komponenten, die eine derartige Schalteinrichtung umfasst, bildet sie ein sehr komplexes und aufwendiges System, welches im Falle einer Fehlfunktion nur als Ganzes und damit mit einem erheblichen Wertverlust ausgetauscht werden kann.

Die deutsche Patentschrift DE 103 36 971 B3 zeigt eine Schaltstellungserfassungsvorrichtung gemäß dem Oberbegriffs des Patentanspruchs 1. Diese Vorrichtung umfasst ein mechanisch betätigbares Schaltmittel, ein an die Bewegung dieses Schaltmittels gekoppeltes Geberelement sowie ein zur Erfassung der Stellung des Geberelements mit diesem kooperierendes, ortsfest angeordnetes Signalaufnahmeelement. Über die Ausführung der Positionierung dieser Elemente zueinander oder über die dazu verwendeten Mittel enthält die DE 103 36 971 B3 keine Informationen.

Die Schaltstellungserfassungsvorrichtung gemäß der vorliegenden Erfindung bietet im Zusammenhang mit dem Eingangs genannten Stand der Technik den Vorteil, eine Modularisierung einer solchen Schalteinrichtung zu ermöglichen, so dass im Fehlerfalle ggf. nur ein Teil der gesamten Schalteinrichtung ersetzt werden muss.

Dies gelingt erfindungsgemäß dadurch, dass das Geberelement und das Signalaufnahmeelement in separaten mechanischen Einheiten aufgenommen sind, die zur Ausbildung der Vorrichtung über eine mechanische Schnittstelle miteinander verbunden sind, und dass Informationen über toleranzbedingte Abweichungen der Lagen des Geberelements und des Signalaufnahmeelements von ihren jeweiligen, konstruktionsbedingten Solllagen im Bezug auf die mechanische Schnittstelle in den jeweiligen Einheiten abrufbar vorhanden sind.

Mit einer solchen Vorgehensweise ist insbesondere die hierbei dringend erforderliche Beherrschung der mechanischen Toleranzen des Gesamtsystems gewährleistet.

Dies gelingt erfindungsgemäß dadurch, dass das Geberelement und das Signalaufnahmeelement in separaten mechanischen Einheiten aufgenommen sind, die zur Ausbildung der Vorrichtung über eine mechanische Schnittstelle miteinander verbunden sind, und dass Informationen über toleranzbedingte Abweichungen der Lagen des Geberelements und des Signalaufnahmeelements von ihren jeweiligen, konstruktionsbedingten Solllagen im Bezug auf die mechanische Schnittstelle in den jeweiligen Einheiten abrufbar vorhanden sind.

Mit einer solchen Vorgehensweise ist insbesondere die hierbei dringend erforderliche Beherrschung der mechanischen Toleranzen des Gesamtsystems gewährleistet.

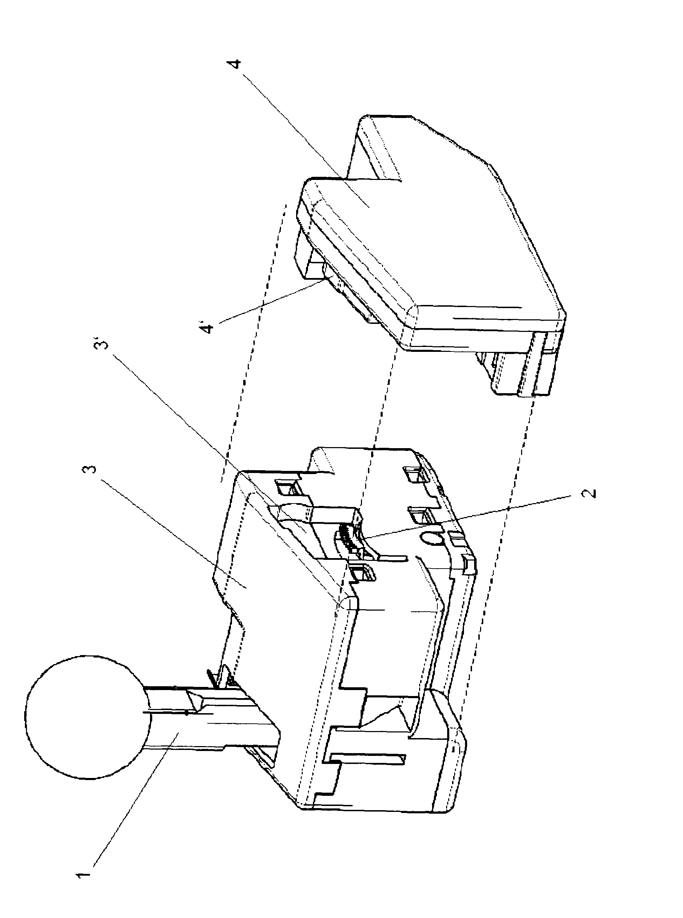

In einer vorteilhaften Ausführungsform sind die separaten mechanischen Einheiten als erste und zweite Gehäuseteile einer Schalteinrichtung ausgebildet, und die mechanische Schnittstelle zwischen den Gehäuseteilen umfasst Führungs- und Positionierungsmittel, die als eine Öffnung im ersten Gehäuseteil und ein in diese einzuführender Kragen am zweiten Gehäuseteil ausgebildet sind.
Weitere vorteilhafte Ausgestaltungen und Weiterbildungen der erfindungsgemäßen Schaltstellungserfassungsvorrichtung werden anhand der Zeichnung erläutert. Dabei zeigt die einzige Figur eine Gangwahl-Schalteinrichtung für ein Kraftfahrzeug mit einer erfindungsgemäßen Schaltstellungserfassungsvorrichtung.

Der in der Zeichnung dargestellte Gangwahlschalter für ein Kraftfahrzeug umfasst zwei mechanische Einheiten, die als erste und zweite Gehäuseteile 3, 4 des Gangwahlschalters ausgebildet sind. Als mechanisch betätigbares Schaltmittel umfasst der Gangwahlschalter einen Schalthebel 1 zum Anwählen verschiedener Getriebestufen eines automatischen Getriebes des Kraftfahrzeugs. Zur Ausbildung der erfindungsgemäßen Vorrichtung zum Erfassen von Schaltstellungen des mechanisch betätigbaren Schalthebels 1 werden die Gehäuseteile 3, 4 entlang der in der Zeichnung gestrichelt dargestellten Linien zusammengeführt und miteinander verbunden. Als eine Öffnung 3' im ersten Gehäuseteil 3 und ein in diese einzuführender Kragen 4' am zweiten Gehäuseteil 4 ausgebildete Führungs- und Positionierungsmittel an den beiden Gehäuseteilen 3, 4 bilden dabei eine mechanische Schnittstelle aus, die eine korrekte Positionierung der in den beiden Gehäuseteilen vorhandenen, zur Kooperation miteinander vorgesehenen Elemente der Schaltstellungserfassungsvorrichtung zueinander sicherstellt.

Eines dieser Elemente, das in dem ersten Gehäuseteil 3 aufgenommen ist, ist ein an die Bewegung des Schalthebels 1 gekoppeltes, und damit dessen Schaltstellung anzeigendes Geberelement, das in diesem Fall als Zahnradsegment 2 ausgebildet ist. Neben dem Schalthebel 1 und dem Geberelement sind in dem Gehäuseteil 3 weitere, insbesondere mechanische bzw. elektromechanische Komponenten vorhanden, die zur Realisierung bestimmter Schaltstellungen und Betätigungskräfte des Schalthebels 1 erforderlich sind. Es handelt sich hierbei insbesondere um eine eine Schaltkulisse sowie einen mit dieser kooperierenden federbelasteten Rastbolzen umfassende Rasteinrichtung sowie um mehrere durch Elektromagneten betätigbare Sperrklinken zur wahlweisen Sperrung bestimmter Schaltstellungen des Schalthebels 1.

Ein zweites, in dem zweiten Gehäuseteil 4 aufgenommenes Element der Schaltstellungserfassungsvorrichtung ist ein zur ortsaufgelösten Erfassung der Stellung des Zahnradsegments 2 gegenüber diesem vorgesehenes Signalaufnahmeelement. Bei dem Signalaufnahmeelement, das in der Zeichnung nicht zu sehen ist, handelt es sich in diesem Falle um eine einen Permanentmagneten sowie ein analoges Hallsensorelement umfassende Baugruppe. Der Permanentmagnet ist mit einem zur Kooperation mit dem Zahnradsegment 2 vorgesehenen Abtriebselement, wie z.B. einer Zahnstange, fest verbunden und gegenüber dem Hallsensorelement linear verschieblich gelagert. Diese gesamte Baugruppe ist auf einer in dem Gehäuseteil 4 vorhandenen elektrischen Leiterplatte so angeordnet, dass beim Zusammenfügen der Gehäuseteile 3, 4 das Zahnradsegment 2 und das mit dem Permanentmagneten verbundene Abtriebselement miteinander in Eingriff kommen. Alternativ hierzu ist auch eine Konfiguration denkbar, bei der der Permanentmagnet fest mit der Mechanik im ersten Gehäuseteil 3 verbunden ist und direkt als Geberelement auf das im zweiten Gehäuseteil 4 angeordnete Hallsensorelement wirkt, so dass auf die die mechanische Übertragung durch Zahnradsegment 2 und Abtriebselement verzichtet werden kann. Selbstverständlich können auch andere Signalaufnahmeelemente zum Einsatz kommen, wie z.B. Potentiometer, Lichtschranken oder ähnliches.

Auf der das Signalaufnahmeelement tragenden Leiterplatte im zweiten Gehäuseteil 4 ist auch eine unter anderem einen Mikroprozessor umfassende Auswerteschaltung für die Schaltstellungserfassungsvorrichtung vorhanden. Die gegenseitige Lage des Zahnradsegments 2 im Gehäuseteil 3 und des Signalaufnahmeelements im Gehäuseteil 4 bestimmen den jeweiligen analogen Ausgangswert des Signalaufnahmeelements bei den jeweils durch den Schalthebel 1 einzunehmenden Schaltstellungen.

Durch die durch die Öffnung 3' im ersten Gehäuseteil 3 und den in diese einzuführenden Kragen 4' am zweiten Gehäuseteil 4 definierte mechanische Schnittstelle 3', 4' ist die gegenseitige Lage der Gehäuseteile 3, 4 zueinander sehr präzise beherrschbar. Die Lage des Signalaufnahmeelements in Bezug auf den Kragen 4' am zweiten Gehäuseteil 4 und die Lage des Zahnradsegments 2 gegenüber der Öffnung 3' im ersten Gehäuseteil 3 sind jedoch mit erheblichen fertigungsbedingten Toleranzen behaftet. Insbesondere die toleranzbedingte Abweichung der Lage des Geberelements von ihrer konstruktionsbedingten Solllage im Bezug auf die Öffnung 3' im ersten Gehäuseteil 3 und damit im Bezug auf die durch diese gemeinsam mit dem Kragen 4' im Gehäuseteil 4 definierte mechanische Schnittstelle kann durch die relativ lange Toleranzkette vom Schalthebel 1 bis zum Zahnradsegment 2 ganz erheblich sein.

Aus diesem Grunde werden im Zuge der Herstellung der mit der erfindungsgemäßen Schaltstellungserfassungsvorrichtung versehenen Gangwahlschalter sowohl die genaue Lage des Signalaufnahmeelements in Bezug auf den Kragen 4' am zweiten Gehäuseteil 4 als auch die genaue Lage des Zahnradsegments 2 gegenüber der Öffnung 3' im ersten Gehäuseteil 3 individuell bei jedem einzelnen Teil etwa an einem Bandendeprüfgerät ermittelt. Dazu werden sowohl das erste Gehäuseteil 3 als auch das zweite Gehäuseteil 4 nach ihrer Fertigstellung jeweils mit einem genormten Gegenstück verbunden, und dann die Lage des im Gehäuse vorhandenen Elements der Schaltstellungserfassungsvorrichtung im Bezug auf diese genormten Verhältnisse ermittelt. Informationen über diese ermittelte Lage des jeweiligen Elements gegenüber dem jeweiligen Gehäuseteil 3, 4 werden dann abrufbar in der jeweiligen Einheit abgespeichert. Dies erfolgt beispielsweise digital durch Ablegen eines bestimmten Wertes in einem Speicherbaustein oder in analoger Form durch eine Widerstandskodierung mittels Laserabgleich. Es ist hierbei jede Form der Speicherung dieser Informationen denkbar.

Bei einer durch Zusammenfügen der beiden Gehäuseteile 3, 4 komplettierten Schaltstellungserfassungsvorrichtung kann die im zweiten Gehäuseteil 4 vorhandene Auswerteschaltung auf die in beiden Gehäuseteilen 3, 4 gespeicherten Lageinformationen zugreifen und daraus einen Korrekturwert für die gesamte Einrichtung ermitteln, der eine Toleranzkorrektur für das Gesamtsystem mit hoher Präzision ermöglicht.

Wird etwa in einem erforderlichen Reparaturfall nur eine der beiden Einheiten 3, 4 ausgetauscht, so kann durch die Individualisierung der Lageinformation für die jeweilige Einheit in jedem Fall ein neuer Korrekturwert für die geänderte gesamte Einrichtung ermittelt werden, der eine neue Toleranzkorrektur ermöglicht, die ebenso präzise wie die ursprüngliche ist.

## Patentansprüche

1. Vorrichtung zum Erfassen von Schaltstellungen eines mechanisch betätigbaren Schaltmittels, mit einem eine an die Bewegung des Schaltmittels gekoppelten, eine Schaltstellung anzeigenden Geberelement und einem zur ortsaufgelösten Erfassung der Stellung des Geberelements mit diesem kooperierenden diesbezüglich ortsfest angeordneten Signalaufnahmeelement, **dadurch gekennzeichnet, dass** das Geberelement und das Signalaufnahmeelement in separaten mechanischen Einheiten (3, 4) aufgenommen sind, die zur Ausbildung der Vorrichtung über eine mechanische Schnittstelle (3', 4') miteinander verbunden sind, und dass Informationen über toleranzbedingte Abweichungen der Lagen des Geberelements und des Signalaufnahmeelements von ihren jeweiligen, konstruktionsbedingten Solllagen im Bezug auf die mechanische Schnittstelle (3', 4') in den jeweiligen Einheiten (3, 4) abrufbar vorhanden sind.

2. Schaltstellungserfassungsvorrichtung nach Anspruch 1, **dadurch gekennzeichnet, dass** die separaten mechanischen Einheiten als erste und zweite Gehäuseteile (3, 4) einer Schalteinrichtung ausgebildet sind.

3. Schaltstellungserfassungsvorrichtung nach Anspruch 2, **dadurch gekennzeichnet, dass** die mechanische Schnittstelle zwischen den Gehäuseteilen durch Führungs- und Positionierungsmittel an den beiden Gehäuseteilen (3, 4) gebildet ist.

4. Schaltstellungserfassungsvorrichtung nach Anspruch 3, **dadurch gekennzeichnet, dass** die Führungs- und Positionierungsmittel an den beiden Gehäuseteilen (3, 4) als eine Öffnung (3') im ersten Gehäuseteil (3) und ein in diese einzuführender Kragen (4') am zweiten Gehäuseteil (4) ausgebildet sind.

5. Schaltstellungserfassungsvorrichtung nach einem der Ansprüche 2 bis 4, **dadurch gekennzeichnet, dass** das Geberelement ein Zahnradsegment (2) ist, und dass das Signalaufnahmeelement eine einen Permanentmagneten sowie ein analoges Hallsensorelement umfassende Baugruppe ist, wobei der Permanentmagnet mit einem zur Kooperation mit dem Zahnradsegment (2) vorgesehenen Abtriebselement fest verbunden und gegenüber dem Hallsensorelement linear verschieblich gelagert ist.

6. Schaltstellungserfassungsvorrichtung nach Anspruch 5, **dadurch gekennzeichnet, dass** die den Permanentmagneten und das Hallsensorelement umfassende Baugruppe auf einer in dem zweiten Gehäuseteil (4) vorhandenen elektrischen Leiterplatte so angeordnet ist, dass beim Zusammenfügen der Gehäuseteile (3, 4) das Zahnradsegment (2) und das mit dem Permanentmagneten verbundene Abtriebselement miteinander in Eingriff kommen.

7. Schaltstellungserfassungsvorrichtung nach einem der Ansprüche 1 bis 6, **dadurch gekennzeichnet, dass** diese Bestandteil eines Gangwahlschalters für ein Kraftfahrzeug ist.

## Claims

1. Apparatus for sensing the switch positions of a mechanically operable switching means, having a transmitting element which is coupled to the movement of the switching means for indicating a switch position, and a fixed-location signal-recording element for the purpose of sensing the position of the transmitter element in a high sensitivity-resolved manner cooperating with the same, **characterised in that** the transmitter element and the signal-recording element are accommodated in separate mechanical assemblies (3, 4) which are connected to each other by means of a mechanical interface (3', 4') for the purpose of forming the apparatus, and that information in respect of tolerance-related deviations of the positions of the transmitter element and the signal-recording element from their respective design-related specified positions in relation to the mechanical interface (3', 4') is provided in a retrievable manner in the relevant assemblies (3, 4).

2. Switch position sensing apparatus according to Claim 1, **characterised in that** the separate mechanical assemblies are formed as the first and second housing members (3, 4) of a switching device.

3. Switch position sensing apparatus according to Claim 2, **characterised in that** the mechanical interface between the housing members is formed by guiding and positioning means on the two housing members (3, 4).

4. Switch position sensing apparatus according to Claim 3, **characterised in that** the guiding and positioning means on the two housing members (3, 4) are designed as an opening (3') in the first housing member (3) and a collar (4') on the second housing member (4) to be inserted into the same.

5. Switch position sensing apparatus according to any of Claims 2 to 4, **characterised in that** the transmitter element is a toothed gear segment (2) and that the signal-recording element is a unit comprising a permanent magnet and an analogue Hall sensor component, whereby the permanent magnet is firmly attached to an output element provided for cooperating with the toothed gear segment (2) and is supported in a linearly moveable manner in respect of the Hall sensor component.

6. Switch position sensing apparatus according to Claim 5, **characterised in that** the unit comprising the permanent magnet and the Hall sensor component are arranged on an electrical circuit board provided in the second housing member (4) in such a manner that, upon joining the housing members (3, 4) together, the toothed gear segment (2) and the output element connected to the permanent magnet engage with each other.

7. Switch position sensing apparatus according to any of Claims 1 to 6, **characterised in that** this is a constituent part of a gear selector switch for a motor vehicle.

## Revendications

1. Dispositif de détection de positions de commutation d'un moyen de commutation actionnable mécaniquement, avec un élément indicateur g ne vois pas mieux, couplé au mouvement du moyen de commutation et indiquant une position de commutation, et avec un élément capteur de signaux installé fixement, qui coopère avec l'élément indicateur pour la détection de la position spatiale de celui-ci, **caractérisé en ce que** l'élément indicateur et l'élément capteur de signaux sont logés dans des unités mécaniques séparées (3, 4), qui sont reliées ensemble par l'intermédiaire d'une interface (3', 4') pour former le dispositif, et que des informations concernant des divergences, dues aux tolérances, des positions par rapport à l'interface mécanique (3', 4'), de l'élément indicateur et de l'élément d'enregistrement de signaux, divergences par rapport à leurs positions théoriques de construction respectives, sont disponibles dans les unités respectives (3, 4).

2. Dispositif de détection de positions de commutation selon la revendication 1, **caractérisé en ce que** les unités mécaniques séparées sont réalisées en tant que première et deuxième pièces (3, 4) d'un dispositif de commutation.

3. Dispositif de détection de positions de commutation selon la revendication 2, **caractérisé en ce que** l'interface mécanique est formée entre les pièces de boîtier par des moyens de guidage et de positionnement sur les deux pièces de boîtier (3, 4).

4. Dispositif de détection de positions de commutation selon la revendication 3, **caractérisé en ce que** les moyens de guidage et de positionnement sur les deux pièces de boîtier (3, 4) sont réalisés sous la forme d'une ouverture (3'), qui est pratiquée dans la première pièce de boîtier (3), et d'une collerette (4') qui, formée sur la deuxième pièce de boîtier (4), peut être introduite dans l'ouverture.

5. Dispositif de détection de positions de commutation selon l'une des revendications 2 à 4, **caractérisé en ce que** l'élément indicateur est un segment de roue dentée (2) et que l'élément capteur de signaux est un groupe comprenant des aimants permanents ainsi qu'un capteur à effet Hall analogique, sachant que l'aimant permanent est relié fixement à un élément de commande mené, prévu pour coopérer avec le segment de roue dentée (2), et est monté mobile linéairement par rapport au capteur à effet Hall..

6. Dispositif de détection de positions de commutation selon la revendication 5, **caractérisé en ce que** le groupe, comprenant les aimants permanents et le capteur à effet Hall, est disposé sur une plaque de circuits électrique, présente dans la deuxième pièce (4) du boîtier, et que, lors de l'assemblage des pièces (3, 4) du boîtier, le segment de roue dentée (2) et l'élément de commande mené, relié à l'aimant permanent, sont en prise l'un avec l'autre.

7. Dispositif de détection de positions de commutation selon l'une des revendications 1 à 6, **caractérisé en ce que** celui-ci est composant d'un commutateur de sélection de vitesse pour un véhicule automobile.
